# EUROPEAN PATENT APPLICATION

(11) **EP 4 546 716 A1**
(43) Date of publication of application: **30.04.2025**
(21) Application number: 24207168.6
(22) Date of filing: 17.10.2024
(51) Int. Cl.: H04L 9/40

(54) **IDENTIFICATION OF THREATS VIA TLS CERTIFICATE ANALYSIS**

(30) Priority: 24.10.2023 US 202318493437
(71) Applicant: Arista Networks, Inc., Santa Clara, CA 95054 (US)
(72) Inventor: Dhurjaty, Niranjan Kiran Kumar, Santa Clara, CA, 95054 (US); Malinka, John Joseph, Santa Clara, CA, 95054 (US); Golomb, Gary Joshua, Santa Clara, CA, 95054 (US)
(74) Representative: Hoffmann Eitle

(57) **Abstract**

Systems, methods and products for using context-based analyses of information obtained from certificates contained in the TLS handshakes of network communications in order to identify anomalies in the information and detect threats based on the identified anomalies. In one embodiment, a method for detecting threats in network communications includes obtaining static context data associated with the network. A first network communication transmitted via a network is obtained. A certificate is obtained from a TLS handshake of the first network communication and the certificate is parsed to obtain corresponding certificate field values. One or more analyses of the certificate field values are performed against the static context data and, in response to the analyses resulting in detection of a threat, one or more actions are taken based on the analyses.

## Description

### TECHNICAL FIELD

The disclosed embodiments relate generally to network devices, and more particularly to systems and methods for context-based threat analysis of TLS certificates.

### BACKGROUND

The embodiments disclosed herein relate generally to identification of network threats, and more particularly to systems, methods and products for identifying threats using context-based analyses of information obtained from Transport Layer Security (TLS) handshakes of network communications.

Studies reveal that more than 70% of network traffic is encrypted, and TLS encryption is used in substantially all of these encrypted communications to guarantee the confidentiality and integrity of the transmitted data. When a user (through browser) or any application tries to connect to a web site on TLS (Https), a handshake will be performed between the client and server so that the server can prove its identity using the its certificate.

Certificates are used to authenticate the servers before the TLS tunnel is built and traffic is encrypted. These certificates are signed by a certifying authority and may in some cases be certified by additional authorities (which may be referred to as certificate chaining). The certificate chain ends with a self-signed certificate that was issued by a well-known root authority. This proves the authenticity of the certificates that are used to encrypt the network traffic. Many organizations deploy their own certificate infrastructure for internal purposes, where the organizations sign local server/system certificates that are not valid outside of the organizations' respective networks.

Some organizations deploy TLS visibility engines / proxy servers that decrypt the traffic intended for external servers. These TLS visibility engines / proxy servers monitor the traffic and re-encrypt the traffic before sending it to the external destination (the intended domain).

These same techniques are sometimes used by cyber attackers to steal sensitive data (these attacks are referred to as man-in-the-middle, or MitM attacks). These techniques may also be used by organization insiders who deploy rogue TLS proxy servers (it is not possible to use a genuine certificate for this type of deployment). Threat actors (attackers) using beacons, Command and Control (C&C) schemes and data exfiltration schemes can also use this technique to pretend they are valid. Every organization and every user using TLS sessions is vulnerable to this type of attack.

While most communications involved in these types of attacks include TLS certificate anomalies that can be identified and used to detect the attacks, often these TLS certificate anomalies are not reported to the user. Alternatively, if the anomalies are reported to the user, they are reported in browser error messages that are opaque to the user and are frequently ignored. When these anomalies are detected by malicious software, the offending conditions are intentionally ignored by the malicious software.

### BRIEF DESCRIPTION OF THE DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features.
FIG. 1 is a flow diagram illustrating an example method for detecting network threats in accordance with some embodiments.
FIGS. 2A-2F are diagrams illustrating information contained in a certificate for a network communication in accordance with some embodiments.
FIGS. 3A-3H are diagrams illustrating logic used to perform context-based threat detections in accordance with some embodiments.

### DETAILED DESCRIPTION

Embodiments and the various features and advantageous details thereof are explained more fully with reference to the non-limiting embodiments that are illustrated in the accompanying drawings and detailed in the following description. Descriptions of well-known starting materials, processing techniques, components and equipment are omitted so as not to unnecessarily obscure the embodiments in detail. It should be understood, however, that the detailed description and the specific examples are given by way of illustration only and not by way of limitation. Various substitutions, modifications, additions and/or rearrangements within the spirit and/or scope of the underlying inventive concept will become apparent to those skilled in the art from this disclosure.

The embodiments disclosed herein provide solutions to the problems noted above by using context-based analyses of information obtained from certificates contained in the TLS handshakes of network communications in order to identify anomalies in the information and detect threats based on the identified anomalies.

The disclosed embodiments not only validate the TLS-handshakes of the network communications, but also serve to identify anomalies in the certificates which are used to validate the communications. The anomalies can indicate that an attacker may be exploiting the weaknesses of the TLS handshake scheme to avoid detection of their malicious activities or to potentially compromise the confidentiality and integrity of the network communications. The disclosed embodiments provide context-based certification analysis, such as determining whether a requested domain is internal or not, determining a location of a responding destination, etc.

The disclosed embodiments are implemented in a network appliance which is passive (out-of-band) and is therefore tamper-proof. The disclosed embodiments use machine learning algorithms that are capable of identifying whether or not sessions are established by a browser by analyzing the network traffic. The disclosed embodiments are further capable of identifying whether end machines (e.g. a client trying to access a website) have accepted or rejected the server certificate by analyzing the network traffic. If the certificate is not valid, then the browser will return an error message that will be captured by the disclosed embodiments. The disclosed embodiments may additionally be capable of detecting whether a server is internal or not through an IP address.

In some embodiments, the network appliance intercepts network communications, validates the certificates in the communications using conventional techniques and further collects field values from the certificates (e.g., Common Name (CN), validity dates, issuing organization, Subject Alternative Names (SANs), last/root certificate, and issuer details) during the TLS handshake process so that these values can be analyzed against static context data for the network. This allows the appliance to determine whether the collected certificate values are consistent with the context data (including details of all root certifiers and internal domains).

Even if a certificate appears to be valid based on conventional validation techniques, analyses of the parsed certificate values against the context data may indicate a problem. The analyses detect all invalid and rogue certificates across the network, such as invalid certificates created by developers for testing, or rogue certificates used to execute man-in-the-middle attacks. The analyses also detect TLS proxy/visibility engines which are deployed on the network and determine whether they are deployed as part of legitimate organizational security or are used in insider attacks.

The disclosed embodiments provide a number of benefits with respect to the problems of conventional systems. For example, these embodiments add another layer of security to applications which are not commonly developed with thorough certificate validation. They also add context that highlights the possible intent of using invalid or rogue certificates, which can substantially reduce the time taken to determine the root causes and take remedial actions. The disclosed embodiments detect the rogue certificates at very early stages and can therefore prevent many attackers from being successful. The disclosed embodiments can also detect compromised endpoints which accept invalid and rogue certificates and establish encrypted sessions. The disclosed embodiments additionally detect valid certificates by trusted global root authority or local enterprise certifying authority certificates to reduce false positives.

### Context-based threat detection

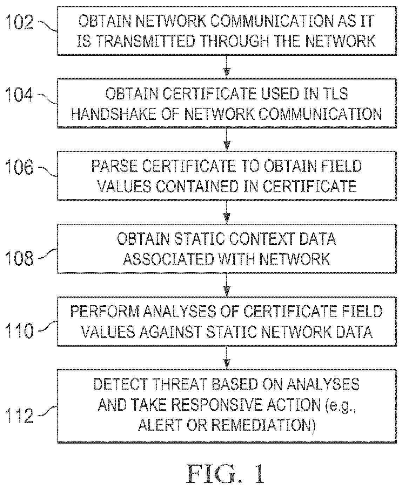

Referring to FIG. 1, a flow diagram is shown to illustrate an example method for detecting network threats in accordance with some embodiments. In this method, a network communication is obtained as it is transmitted via the network (step 102). In some embodiments, the network communication may be obtained by intercepting the communication as it is transmitted through the network. "Intercepting," as used here, means tapping part of the communication (snooping the communication) as it is transmitted without interrupting the initial transmission.

At step 104, a certificate which is used in the TLS handshake of the network communication is obtained. The certificate may be a single certificate, or the communication may use a chained series of certificates.

A certificate is a digital document that provides proof of identity for a domain or person. Just as people use government issued ID cards as a means accepted by everyone to prove their respective identities, communications in cyberspace use certificates issued by a few well known companies (global root certifying authorities) as a means which is accepted by everyone to prove the identities of the domains involved in the communications. The global root certifying authorities issue certificates to a few other organizations called intermediate certifying authorities, which may then issue certificates to domains or people after validating their credentials. Since root authorities are trusted, the intermediate authorities and the certificates finally issued to the domains are also trusted. This is called the chain of trust.

At step 106, the certificate is parsed to obtain associated certificate field values. In some embodiments, these field values include the common name for the domain, the dates for which the certificate is valid (e.g., a starting validity date and an ending validity date), the organization issuing the certificate, subject alternative names (names other than the common name which may be used for the domain), the last certificate in a series of chained certificates (also referred to as a root certificate), and details of the certificate issuer.

At step 108, static context data associated with the network is obtained. Some of this context data is already obtained from the network for other purposes. Other parts of the static context data is not already parsed from the available network data for other purposes, but is instead parsed and obtained exclusively for use in the context analyses of the disclosed embodiments. Still other parts of the static context data may not already be available (but unparsed) from the network, but may be added and maintained by the network specifically for the purpose of making the data available for use in the context analyses of the disclosed embodiments.

At step 110, one or more analyses of the certificate field values are performed against the static context data obtained from the network. These analyses go beyond the standard validation of the certificate that is used to encrypt the network communication and are intended to determine whether the information in the certificate is consistent with a legitimate, non-malicious network communication, or a communication made by malware or a bad actor for malicious purposes.

At step 112, in response to determining that one or more of the context-based analyses indicate that the network communication is (or is associated with) a threat, actions may be taken to provide a notification of the threat (e.g., by sending an alert to a user) or to remediate the threat. If, on the other hand, the context-based analyses do not indicate a threat, the network communication is allowed to proceed (e.g., the communication may be re-encrypted and forwarded to its destination).

### Information contained in certificates

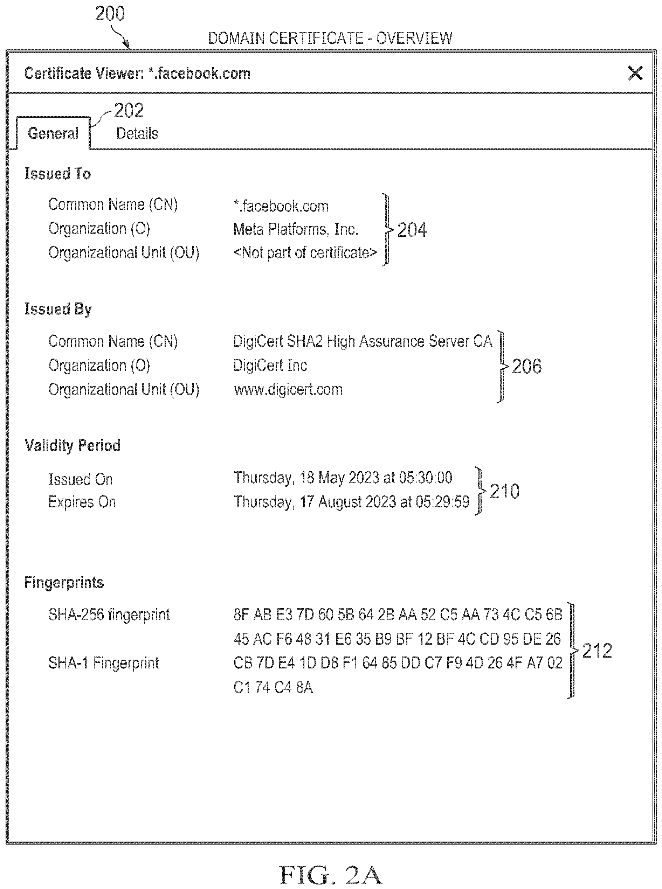

An example of the information that is contained in a certificate for a network communication is discussed below with respect to FIGS. 2A-2F. These figures depict screenshots of a certificate viewer which enables a user to examine general and detailed information contained in a certificate. These figures are presented to show the information contained in the certificate, but should not be construed to imply that a certificate viewer is required for the disclosed embodiments.

Referring to FIG. 2A, a diagram is shown to illustrate general information contained in a certificate for a network communication in accordance with some embodiments. As depicted in this figure, a certificate viewer 200 has a selectable tab 202 on which general information associated with the certificate is viewable. This includes information on the domain for which the certificate is issued (204), the entity that issued the certificate (206), the period during which the certificate is valid (210) and fingerprints associated with the certificate (212).

The information 204 on the domain for which the certificate is issued includes a common name (CN) of the domain and an organization associated with the domain (O). General information 204 may also include an organizational unit (OU) of the organization the entity associated with the domain, although in this particular example, no organizational unit is provided. The information 206 on the entity that issued the certificate also includes a common name (CN) of the issuer, an organization (O) of the issuer, and an organizational unit (OU) for the issuer.

In the example of FIG. 2A, the general information for the certificate also includes a validity period 210 which is specified by a date on which the certificate was issued and a date on which the certificate expires. The general certificate information further includes fingerprints for hash algorithms that are used to encrypt the certificate. In this example, fingerprints are provided for both SHA-256 and SHA-1 hash algorithms.

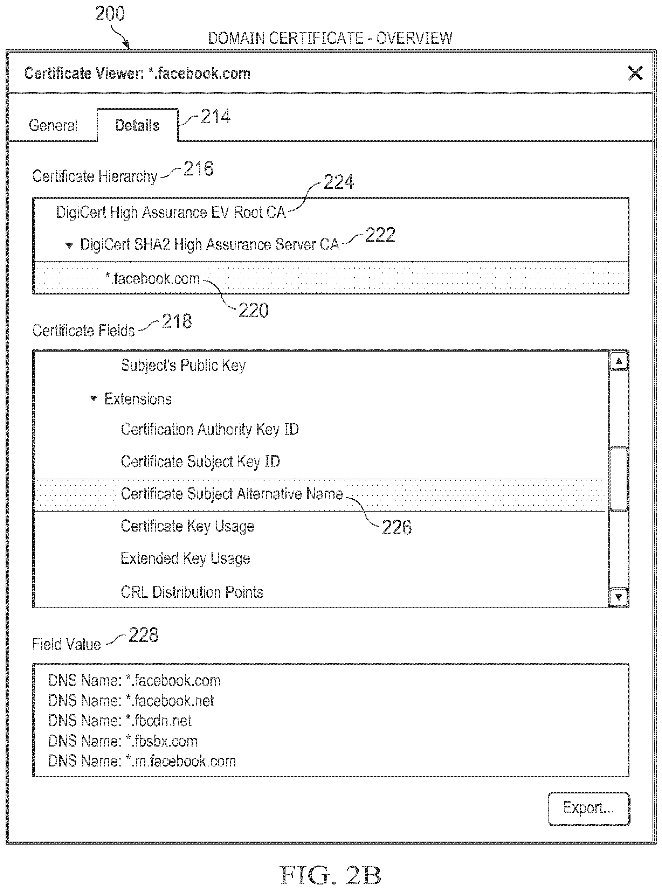

Referring to FIG. 2B, a diagram is shown to illustrate some detailed information contained in a certificate for a network communication in accordance with some embodiments. As depicted in this figure, certificate viewer 200 has a selectable tab 214 on which detailed information associated with the certificate is viewable. This includes information on a certificate hierarchy 216 and certificate fields 218.

As noted above, the certificate may be chained, with multiple certifying authorities successively certifying the authenticity of the certificate. In this example, the domain which is certified 220 ("*.facebook.com") is certified by an intermediate certifying authority 222 ("DigiCert SHA2 High Assurance Server CA"), which is in turn certified by a root certifying authority 224 ("DigiCert High Assurance EV Root CA"). In this figure, the certified domain 220 ("*.facebook.com") is highlighted to indicate that it is selected.

The "Certificate Fields" 218 section of the certificate viewer displays a set of fields, each of which can be selected to view the corresponding field values. In FIG. 2B, the field "Certificate Subject Alternative Name" 226 is selected. When this field is selected, the corresponding field values are displayed in the "Field Value" 228 section of the viewer. In this example, the subject alternative names identified in the certificate include the list of DNS names "*.facebook.com", "*.facebook.net", "*.fbcdn.net", "*.fbsbx.com", and "*.m.facebook.com".

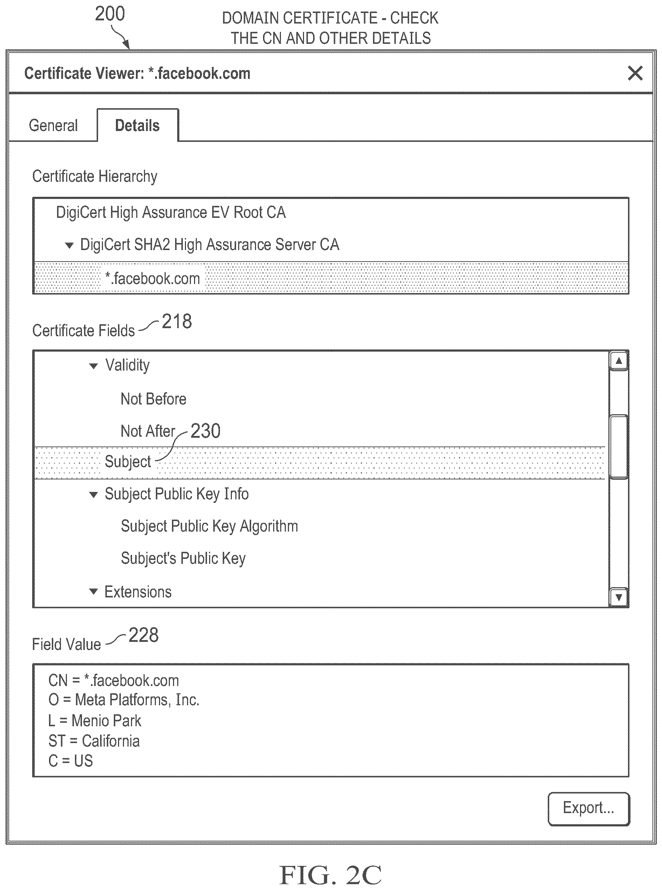

Referring to FIG. 2C, a diagram is shown to illustrate detailed certificate information including subject information in accordance with some embodiments. Certificate viewer 200 allows the user to scroll through the available fields for the selected domain or certifying authority. In this figure, the certified domain 220 ("*.facebook.com") is again highlighted to indicate that it is selected. Within certificate fields 218, subject 230 is highlighted, so the corresponding field values are shown in section 228 of the viewer. In this example, the subject information includes common name "*.facebook.com", organization "Meta Platforms, Inc.", location "Menlo Park", State "California", and country "US".

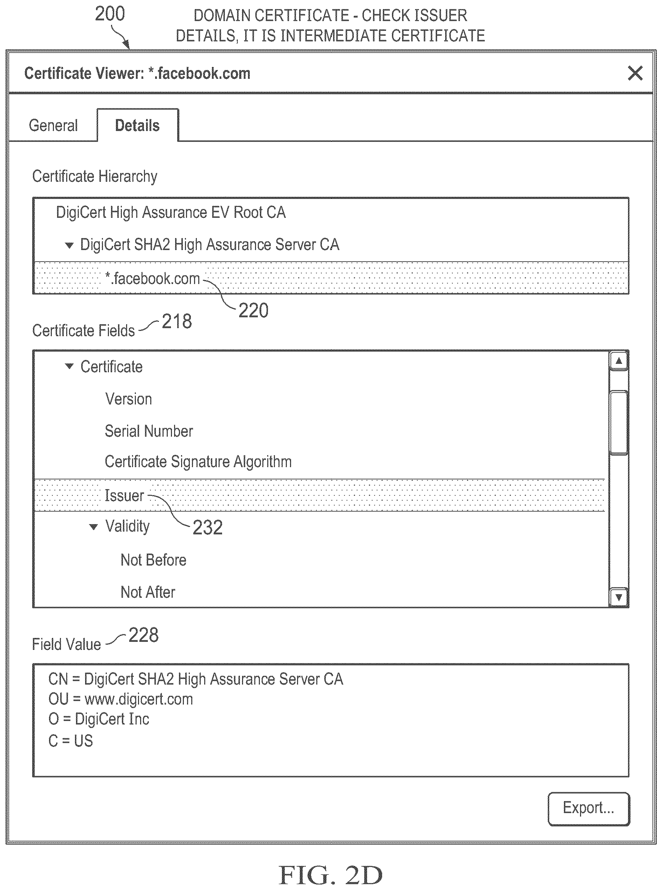

Referring to FIG. 2D, a diagram is shown to illustrate detailed certificate information including certificate issuer information in accordance with some embodiments. Certificate viewer 200 is used to scroll through available fields for the selected domain, which in this example is certified domain 220 ("*.facebook.com"). Because the certified domain is selected, it is highlighted in the certificate fields window (218). Within certificate fields 218, issuer 232 is selected and highlighted. Accordingly, the field values corresponding to the issuer are shown in field value section 228 of the viewer. In this example, the issuer information includes the common name of the issuer ("DigiCert SHA2 High Assurance Server CA"), the organizational unit of the issuer ("www.digicert.com"), the issuer's organization ("DigiCert Inc") and the issuer's country ("US").

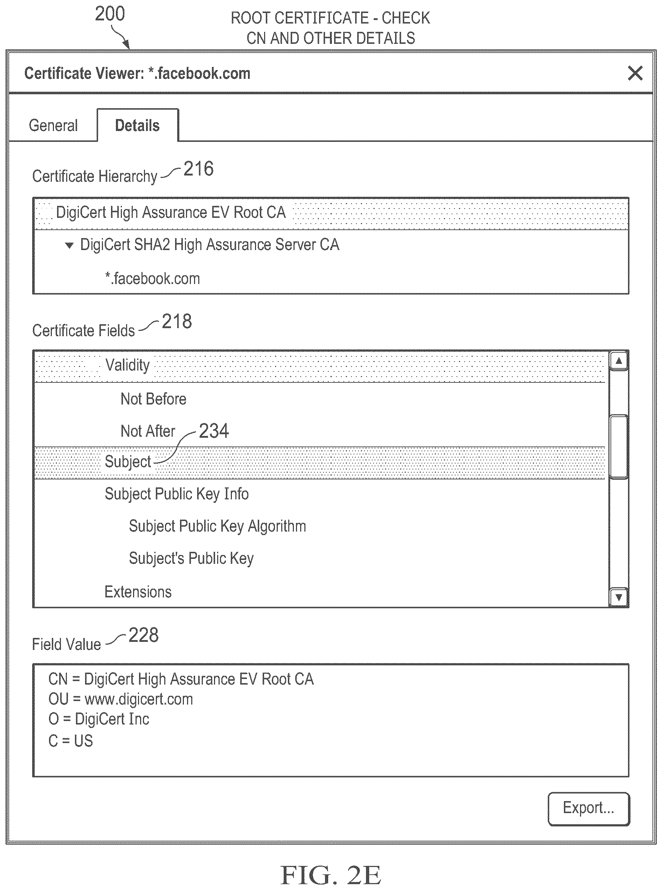

Referring to FIG. 2E, a diagram is shown to illustrate detailed certificate information including root certificate subject information in accordance with some embodiments. In this example, certificate viewer 200 is used to view the available fields for the root certificate authority 224 which is selected in certificate hierarchy 216. Because the root certificate authority is selected, it is highlighted in certificate hierarchy window 216. Further, the selection of root certificate authority 224 causes the certificate fields associated with the root certificate authority to be displayed in window 218. Additionally, the field values displayed in window 228 correspond to the selected certificate field of the root certificate authority. In the particular example of FIG. 2E, the field values for subject 234 of root certificate authority 224 include the common name "DigiCert High Assurance EV Root CA", the organizational unit "www.digicert.com", the organization "DigiCert Inc" and the country "US".

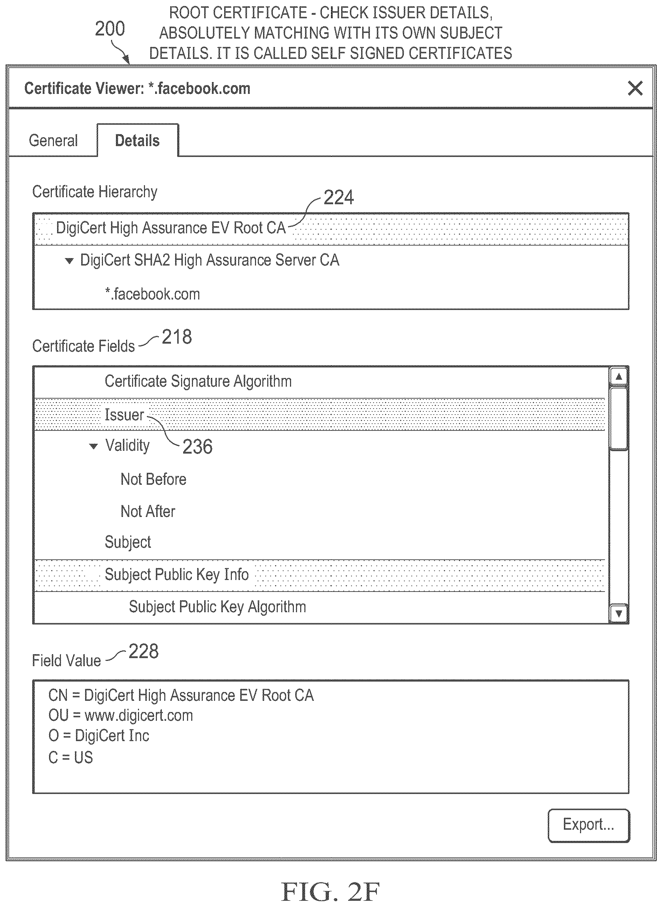

Referring to FIG. 2F, a diagram is shown to illustrate detailed certificate information including root certificate issuer information in accordance with some embodiments.

As in FIG. 2E, the example of FIG. 2F, shows the use of certificate viewer200 to view the available fields for the root certificate authority 224 (selected and highlighted in certificate hierarchy 216). Because the root certificate authority is selected, the certificate fields associated with root certificate authority 224 are displayed in window 218. In this figure, the "issuer" field is selected in the certificate fields window. The field values displayed in this window correspond to the selected certificate field of the root certificate authority and the field values 228 corresponding to the issuer of the root certificate authority. These field values include the common name "DigiCert High Assurance EV Root CA", the organizational unit "www.digicert.com", the organization "DigiCert Inc" and the country "US".

It should be noted that the displayed fields for the subject 234 and issuer 236 of root certificate authority 224 are the same. The is the case because the root certificate is self-certified. Consequently, the root certificate authority is both the issuer and the subject of the certificate.

As noted above, the examples of FIGS. 2A-2F are provided to show the types of information that are contained in the certificates that are included in each network communication so that a TLS handshake can be performed for the communication. In the disclosed embodiments, the certificate information is automatically extracted by a network appliance so that it can be analyzed with respect to the context information of the network.

### Information used in disclosed embodiments

The analysis of the certificate information is analyzed against several different categories of information. These categories include: information that is already being parsed from each TLS activity on the network (i.e., the type of information that parsed for existing systems); information that is added to the disclosed systems for use in the context-based analyses; and information that is parsed from each TLS activity for the purposes of the disclosed embodiments (but which was not parsed from the TLS activities for existing systems).

The first and third categories of information are obtained during the TLS handshake process. As a part of protocol parsing, all relevant certificate data is collected and fed into the system. This information includes many details from the end server / domain certificate, along with the root certificate. The second category of information is static data that is fed to the system. "Static", as used herein, refers to data that does not change with each TLS activity, such as global certificate stores, domain lists, and the like. "Static" does not imply that the information is unchanging, as the information is updated based on changes in the sources from which the information is obtained.

The first category of information - Information that is already being parsed from each TLS activity on the network - includes the requested URL / domain, the common name, and the issuer identified in the certificate for the TLS activity. As noted above, the domain / URL is the destination user is trying to access. In the example of FIG. 2A, the domain the user is attempting to access is "facebook.com". By capturing network traffic and analyzing it, a domain name can be detected when a user tries to access it from a browser, or when an application tries to establish a connection. As also noted above, the common name is a field in the certificate which refers to the domain name to which the certificate was issued. The server shares its certificate to the client that is trying to access it to prove authenticity as a part of the TLS handshake. The issuer is also one of the fields in the certificate and is parsed for use in both existing systems and the disclosed embodiments.

The second category of information - Information that is added to the disclosed systems for use in the context-based analyses - includes: global root certificates stores; customer internal domains list; local root authorities; and a standard cipher list.

The global root certificates stores comprise stored lists of global root authorities with their respective details. In some of the disclosed embodiments, this information is stored in the network appliance in order to allow it to enable cross checks of the root certificates in the server certificate chains against the stored global root authority information. In alternative embodiments, the information may be stored in an external data store.

The customer internal domains list comprises a list of different domains that a company may have and may therefore be considered internal to the company. For example, the company Acme Inc. may have multiple domains, such as Acme.com, Acme.net, acmecdn.net, etc. When someone from the Acme office is trying to access one of the domains, it is considered as an internal domain, so it is included on the internal domains list for the company.

The local root authorities are authorities that can issue certificates which are valid only internally within a domain. There are situations where organizations are required to act as root authorities for internal systems. In these situations, the certificates issued by the local server are not valid outside of the system for which it was issued. In fact, even the internal systems may reject the certificates issued by these local authorities. System administrators can add the local root certificate details to trusted stores, which causes all the systems to trust the local generated certificates.

The standard cipher list is simply a list of possible combinations of crypto protocols that may be used.

The third category of information - information parsed from each TLS activity for the purposes of the disclosed embodiments, but which was not parsed from the TLS activities for existing systems - includes subject alternative names and root certificates.

Subject alternative names, as noted above, are similar to common names, but when a company has more than one domain and the company wants to use the same certificate, this field will be populated on certificates (see FIG. 2B). In the disclosed embodiments, this information is extracted from certificates that are shared by a server.

The root certificate is the last certificate in the certificate chain (see FIG. 2B). In the disclosed embodiments, the root certificate is extracted from each TLS activity.

### Context-based analyses

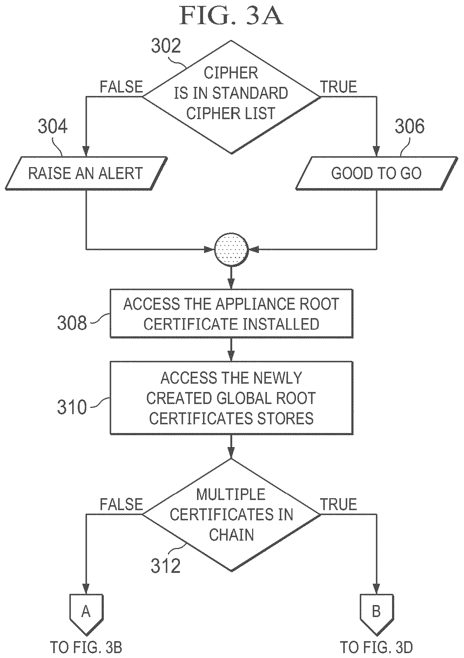

The methodology employed by the disclosed embodiments includes detecting various conditions. The flow charts of FIGS. 3A-3H show the logic used to perform the detections in an example embodiment. In this embodiment, 17 different detections are performed on a network communication. Eleven of these are rogue certifications detections, while three are directed to detecting non-standard internal deployments and another three concern valid certificate exchanges. The individual detections are described in more detail below.

FIGS. 3A-3H are subparts of an overall flow diagram that describes the detection logic used by the example network appliance. Each individual figure includes indications of the connections between the response subparts of the overall flow diagram.

Referring to FIG. 3A, a first portion of the flow diagram is shown. This figure illustrates the initial steps that are taken in the analysis of certificate information obtained from a TLS handshake to detect a corresponding threat. In this figure, it is first determined at step 302 whether the TLS handshake uses a cipher that is in a standard cipher list. The standard cipher list is maintained in the disclosed embodiments but not in existing systems. If the cipher is not in the standard cipher list, an alert is raised at step 304. If the cipher is in the standard cipher list, the flow branches to step 306 and proceeds with the analysis without raising an alert. Whether an alert is raised (at step 304) or not (at step 306), the method proceeds to step 308.

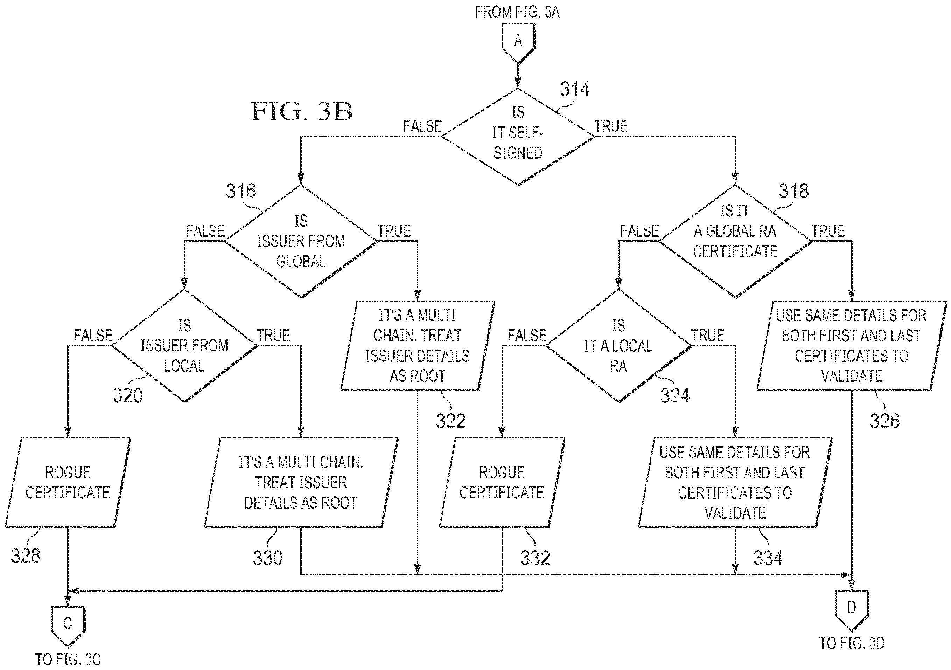

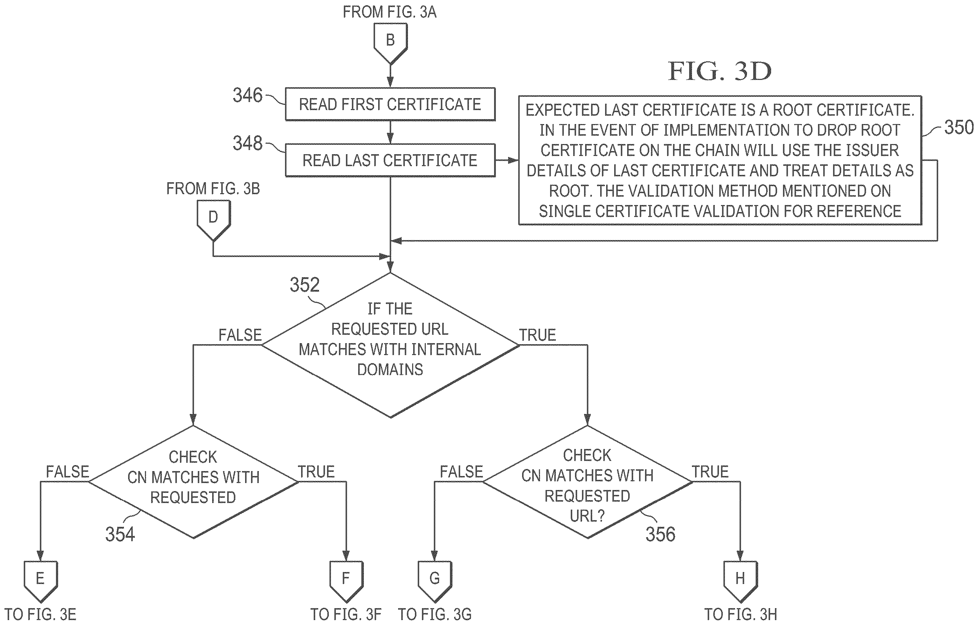

At step 308, the network appliance accesses the root certificate used by the network communication. At step 310, the global root certificate stores of the network appliance are accessed. The global root certificate stores are maintained in the disclosed embodiments, but not in existing systems. At step 312, the network appliance determines whether the network communication includes multiple certificates in a certificate chain. If there are not multiple certificates, the flow branches to the left, continuing with the subpart of the flow shown in FIG. 3B. If there are multiple certificates, the flow branches to the right, continuing with the subpart of the flow shown in FIG. 3D.

Referring to FIG. 3B, the network appliance determines at step 314 whether the certificate is self-signed. If the certificate is not self-signed, it is determined at step 316 whether the issuer of the certificate is on the list of global root certifying authorities maintained by the network appliance. This list of global root certifying authorities is maintained in the disclosed embodiments, but not in existing systems. If the issuer of the certificate is on the list of global root certifying authorities, the flow proceeds to step 322 and the details of the certificate's issuer are treated as those of the root certifying authority. The flow then proceeds to the subpart shown in FIG. 3D.

If at step 316 the issuer of the certificate is not on the list of global root certifying authorities, the flow proceeds to step 320 and it is determined whether the issuer of the certificate is on the list of local certifying authorities maintained by the network appliance. This list of local certifying authorities is maintained in the disclosed embodiments, but not in existing systems. If the issuer of the certificate is on the list of local certifying authorities, the flow proceeds to step 330 and the details of the certificate's issuer are treated as those of the root certifying authority. The flow then proceeds to the subpart shown in FIG. 3D.

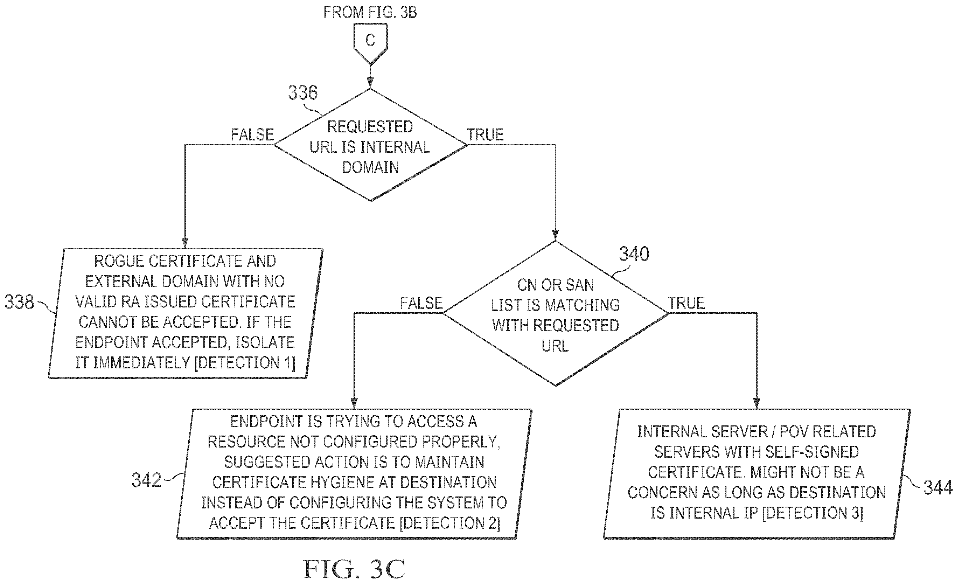

If at step 320 the issuer of the certificate is not on the list of global root certifying authorities, the flow proceeds to step 328, where it is determined that the certificate is a rogue certificate. The flow then proceeds to the subpart shown in FIG. 3C.

Returning to step 314, if the certificate is self-signed, the flow proceeds to step 318, where it is determined whether the certificate is issued by a certifying authority on the list of global root certifying authorities maintained by the network appliance. If the issuer of the certificate is on the list of global root certifying authorities, the flow proceeds to step 326 and the details of both the first and last certificates in the chain are used to validate the certificate. The flow then proceeds to the subpart of the flow shown in FIG. 3D.

If at step 318 it is determined that the certificate's issuer is not on the list of global root certifying authorities maintained by the network appliance, it is determined whether the certificate is issued by a certifying authority on the list of local certifying authorities maintained by the network appliance. If the issuer of the certificate is on the list of local certifying authorities, the flow proceeds to step 334 and the details of both the first and last certificates in the chain are used to validate the certificate. The flow then proceeds to the subpart of the flow shown in FIG. 3D.

If at step 324 it is determined that the certificate's issuer is not on the list of local certifying authorities maintained by the network appliance, it is determined at step 332 that the certificate is a rogue certificate. The flow then proceeds to the subpart shown in FIG. 3C.

### Detection 1:

Referring to FIG. 3C, at step 336, it is determined whether a URL requested in the network communication is an internal domain. While the requested URL is identified in existing systems, the list of internal domains is information that is unique to the disclosed embodiments. If it is determined that the requested URL is not an internal domain, the flow proceeds to step 338, where it is determined that the certificate is rogue and the requested URL is for an external domain with no valid certificate from a root authority. If the Root Certificate is from neither the known global root authority list nor the known local authority list, and it is shared when accessing the external domain, then it is definitely a rogue certificate and should not be accepted. If the handshake is completed without a fatal error, then the end machine is already compromised. Consequently, the device is isolated for remediation activity.

If at step 336 it is determined that the URL requested in the network communication is an internal domain, it is determined at step 340 whether the requested URL matches any of the common names or subject alternative names identified in the certificate. As a reminder, the subject alternative names are details that are used in the disclosed embodiments, but not in existing systems.

### Detection 2:

If the requested URL does not match any of the common names or subject alternative names, the flow proceeds to step 342. In this case, the rogue certificate is presented by an internal resource and the resource to which access is being attempted is not configured properly, so the resource should be investigated for the root cause. If the certificate hygiene is the issue, it will be necessary for an administrator to correct it, instead of configuring the system to accept the certificate.

### Detection 3:

If the requested URL matches any of the common names or subject alternative names, the method flows to step 344, in which case an internal server might be using a self-signed certificate rather than using a certificate issued by a certifying authority. This might not be a concern as long as the destination is an internal IP address, but it is always preferred to follow the appropriate standards. Otherwise, administrators might lose track of certifications.

Returning to step 312 of FIG. 3A, if the network appliance determines that the network communication includes multiple certificates in a certificate chain, the flow branches to the right, continuing with the subpart of the flow shown in FIG. 3D. At step 346, the first certificate in the chain is read by the network appliance, and then at step 348, the last certificate in the chain is read, which is not done in existing systems. It is expected that the last certificate is a root certificate. At step 350, in the event of an implementation to drop the root certificate on the chain, the issuer details of the last certificate will be used and the details will be treated as details of the root certificate. The certificate will be validated with the same method used for single certificate validation.

At step 352, it is determined whether the requested URL matches any of the internal domains that are listed in the list of internal domains maintained by the network appliance. If the requested URL does not match any of the listed internal domains, the flow branches to the left and proceeds to step 354. If the requested URL does match one of the listed internal domains, the flow branches to the right and proceeds to step 356.

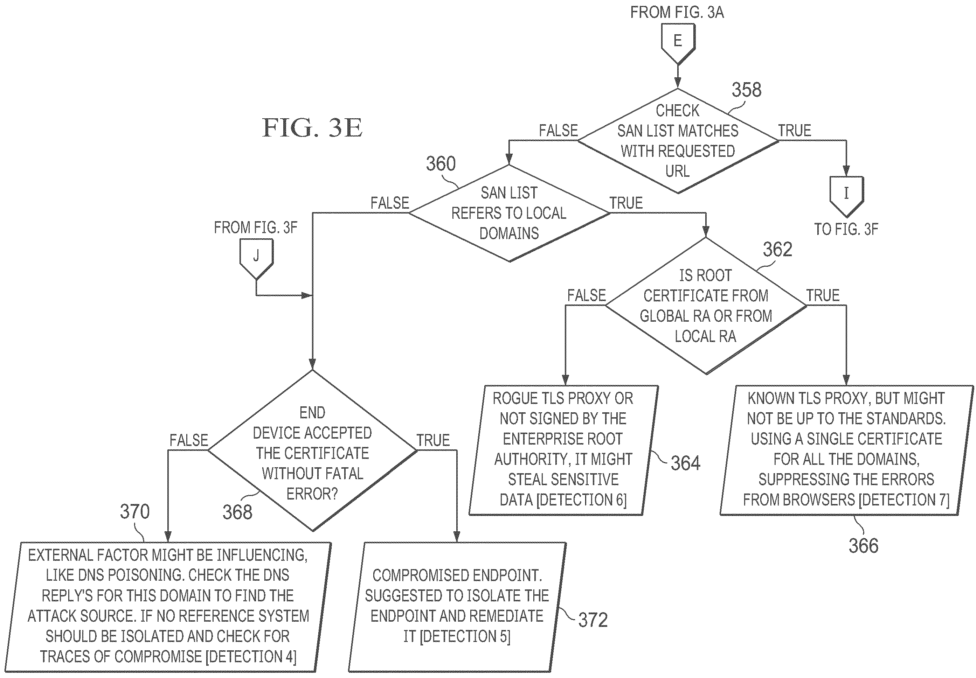

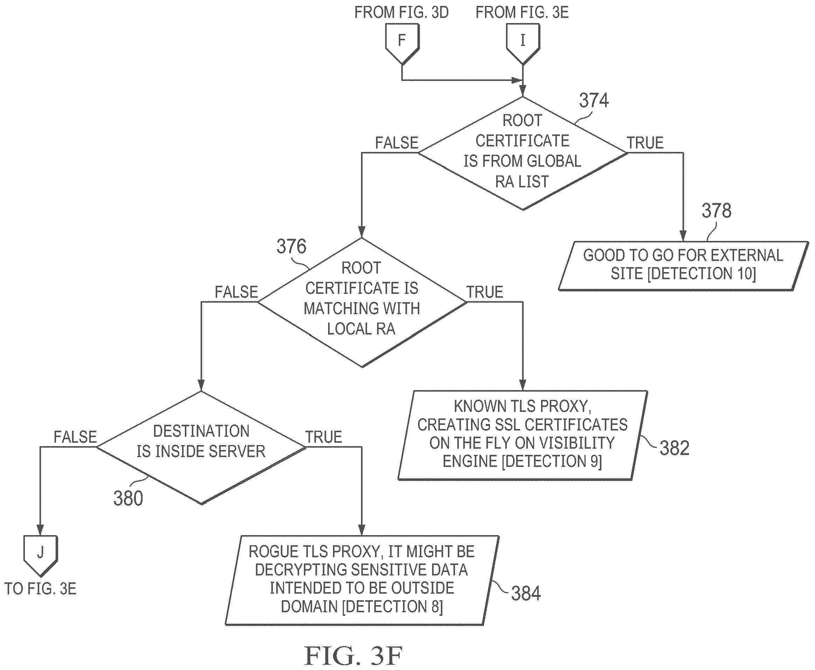

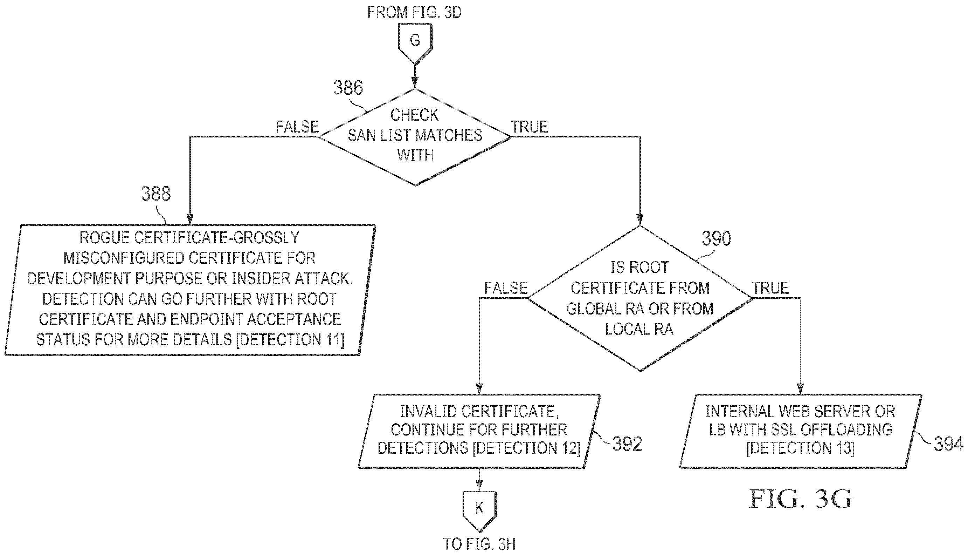

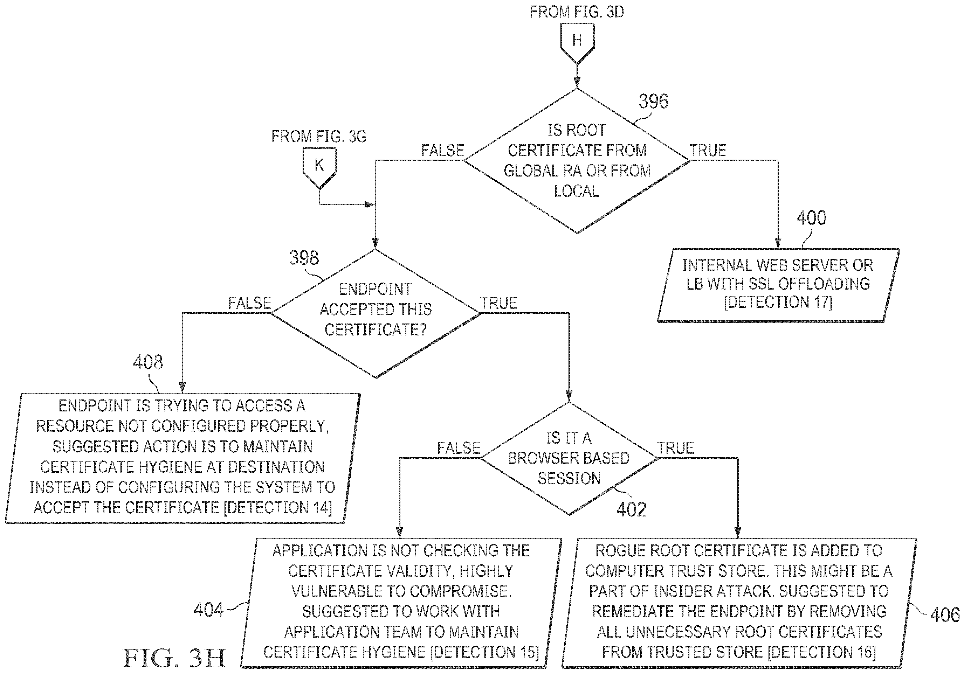

In both step 354 and step 356, it is determined whether the requested URL matches any of the common names on the certificate. If not, the flow branches to the left. Thus, from step 354, the flow proceeds to the subpart of the method shown in FIG. 3E, and from step 356, the flow proceeds to the subpart of the method shown in FIG. 3G. If at step 354 or step 356, it is determined that the requested URL matches one of the common names on the certificate the flow branches to the right. Thus, from step 354, the flow proceeds to the subpart of the method shown in FIG. 3F, and from step 356, the flow proceeds to the subpart of the method shown in FIG. 3H.

Referring to FIG. 3E, if at step 354 it is determined that the requested URL does not match any of the common names on the certificate, the flow proceeds to step 358, where it is determined whether the requested URL matches any of the subject alternative names maintained by the network appliance (information which is not maintained in existing systems). If the requested URL does not match any of the subject alternative names, it is determined at step 360 whether the list of subject alternative names refers to local domains (also information which is not maintained in existing systems).

### Detection 4:

If the list of subject alternative names does not refer to local domains, the flow proceeds to step 368, where it is determined whether the end device at the requested URL accepted the certificate without error. If not, the flow proceeds to step 370. This scenario might arise when an end user is trying to reach out to a domain that is likely valid, but because of some external factor to the end machine (e.g., such as an internal rogue DNS server or compromised DNS server) the external domain is under attack. A thorough investigation is required into why the redirection is happening.

### Detection 5:

If no attack source is identified, the end device system should be isolated and checked for traces of compromise. If the end device at the requested URL accepted the certificate without error, the flow proceeds to step 372. This is similar to detection step 370, but the end machine has already accepted the rogue certificate, and therefore must be isolated first. A thorough investigation is required to uncover malicious software on the end machine and then remediation may then be required.

It should be noted that steps 368-372 will also be performed if the determination at step 380 of FIG. 3F is false.

Returning to step 360, if the list of subject alternative names does refer to local domains, the flow proceeds to step 362, where it is determined whether the root certificate is issued by an authority on the global root authority list or the local root authority list.

### Detection 6:

If the root certificate is not issued by an authority on the global root authority list or the local root authority list, the flow proceeds to step 364, which indicates a rogue TLS proxy or a certificate not signed by the enterprise root authority, so it might be an attempt to steal sensitive data. This attack raises an alarm where, when an endpoint tries to reach an external domain, the subject alternative name list of the certificate presented matches with the local domains but is not issued by a local root authority. Even security-sensitive users may fall victim to traps by looking at internal domain names rather than taking the additional step of checking to see who issued the certificate.

### Detection 7:

If the root certificate is issued by an authority on the global root authority list or the local root authority list, the flow proceeds to step 366, which indicates that TLS proxy/visibility engine(s) deployed by the organization, but it also highlights that the deployment is not following standards. A single certificate is used to deploy the TLS proxy/visibility engine(s), but since the certificates issued are from the local root authority, this deployment should be known to the administrator.

### Detection 10:

Referring to FIG. 3F, step 374 may be reached from either step 354 of FIG. 3D or step 358 of FIG. 3E. At step 374, it is determined whether the root certificate is from one of the issuers on the global root authority list. If the root certificate issuer is on the global root authority list, the flow branches to the right to step 378. This is the ideal condition to establish a TLS connection, as there are no problems with respect to the certificates that are exchanged.

### Detection 9:

If, at step 374, it is determined that the root certificate is not from one of the issuers on the global root authority list, the flow branches to the left to step 376. At step 376, it is determined whether the root certificate is from one of the issuers on the local root authority list. If the root certificate issuer is on the local root authority list, the flow branches to the right to step 382. In this case, a known TLS proxy/visibility engine deployed with the capability to create certificates on behalf of external domains to establish the TLS connections has been detected. This is a genuine deployment for records, so no problem is indicated.

### Detection 8:

If at step 376, it is determined that the root certificate is not from one of the issuers on the local root authority list, the flow branches to the left to step 380. At step 380, it is determined whether the destination of the network communication is an internal server, rather than an external server. If the destination is an internal server, the flow branches to the right to step 384. In this case, an endpoint has tried to reach an external domain and the subject alternative name list of the certificate presented matches with the requested URL, but the certificate is not issued by a local or global RA. This indicates that a rogue TLS proxy has been detected and it might be decrypting sensitive data to be sent to an external domain. Consequently, an alarm is raised.

### Detection 11:

Referring to FIG. 3G, step 386 is reached from step 356 of FIG. 3D. At step 386, it is determined whether the requested URL matches any of the subject alternative names on the list maintained by the network appliance. If the requested URL does not match any of the subject alternative names, the flow proceeds to step 388, in which a misconfigured internal certificate or insider attack to steal data is detected. The certificate is a rogue certificate. When the end user tries to reach an internal resource and the presented certificate is rogue, it requires further analysis.

### Detection 12:

If at step 386 it is determined that the requested URL matches any of the subject alternative names on the list maintained by the network appliance, the flow proceeds to step 390. At step 390, it is determined whether the root certificate is issued by a root authority on either the list of global root authorities or the list of local root authorities maintained by the network appliance. If the root certificate is not issued by a root authority on either the list of global root authorities or the list of local root authorities, the flow proceeds to step 392, where it is determined that the certificate is invalid. In this case, the presented certificate has a subject alternative name list matching the resource that the client is trying to access, but the certificate is not issued by a known global or local root authority. After the invalid-certificate determination is made at step 392, the method proceeds to step 398 of FIG. 3H

### Detection 13:

If at step 390 it is determined that the root certificate is issued by a root authority on either the list of global root authorities or the list of local root authorities maintained by the network appliance, the flow proceeds to step 394. In this case, it is determined that an end machine has been detected trying to establish a connection with a genuine internal server / SSL off-loading engine.

### Detection 14:

Referring to FIG. 3H, the method flows to step 396 from step 356 of FIG. 3D. At step 396, it is determined whether the root certificate is issued by an issuer on either the global root authority list or the local root authority list maintained by the network appliance. If the root certificate is not issued by an authority on either of these lists, the flow proceeds to step 398. At step 398, it is determined whether the endpoint accepted the certificate. If not, it is determined at step 408 that the endpoint is trying to access a resource that is not configured properly. In this case, the suggested action is to maintain certificate hygiene at destination instead of configuring the system to accept the certificate.

### Detection 15:

If at step 398 it is determined that the endpoint accepted the certificate, the flow proceeds to step 402, where it is determined whether the network communication is part of a browser-based session. If not, it is determined at step 404 that the application is not checking the certificate validity, so it is highly vulnerable to compromise. The application is establishing TLS connections without proper validation, which is very important- without this process, there is no way to detect these types of applications that are compromising the network. If this condition is detected, the application team should work to maintain certificate hygiene.

### Detection 16:

Is at step 402 it is determined that the network communication is part of a browser-based session, the flow proceeds to step 406. In this case, it is determined that the endpoint has accepted the rogue certificate without error (a rogue root certificate has been added to the endpoint computer trust store). This might be a part of an insider attack. Preferably, the endpoint is checked to determine whether it has been compromised and the endpoint is remediated by removing all unnecessary root certificates from trusted store.

### Detection 17:

Referring again to step 396, if it is determined that the root certificate is issued by an issuer on either the global root authority list or the local root authority list maintained by the network appliance, the flow proceeds to step 400. In this case, it is determined that an end machine has been detected trying to establish a connection with a genuine internal server / SSL off-loading engine.

The disclosed embodiments may include a number of variations and alternative embodiments. For example, one embodiment comprises a method for detecting threats in network communications. In this method a first network communication transmitted via a network is obtained. A certificate is obtained from a TLS handshake of the first network communication and the certificate is parsed to obtain corresponding certificate field values. The method also includes obtaining static context data associated with the network. One or more analyses of the certificate field values are performed against the static context data and, in response to the analyses resulting in detection of a threat, one or more actions are taken based on the analyses.

In some embodiments, the method includes monitoring all network communications in the network, including the first network communication, and repeating the steps above for each of the network communications.

In some embodiments, receiving the network communication comprises intercepting the TLS handshake of the network communication. Receiving the first network communication may comprise receiving the intercepted TLS handshake of network communication at a network appliance other than a destination device associated with the encrypted network communication. In some embodiments, transmission of the first network communication to the destination device is uninterrupted by interception of the first network communication.

In some embodiments, the certificate field values comprise one or more common names of a certificate holder of the certificate and one or more subject alternative names of corresponding alternative domains that use the certificate. In some embodiments, the certificate field values comprise an issuing organization and information corresponding to the issuing organization. In some embodiments, the certificate field values comprise a set of validity dates.

In some embodiments, obtaining the certificate comprises obtaining a last certificate of a certificate chain and parsing the certificate comprises parsing the last certificate.

In some embodiments, taking the one or more actions in response to detecting a threat comprises providing an alert in response to detecting that a certificate is invalid.

One alternative embodiment comprises a network appliance having a processor and a memory, where the network appliance is adapted to be coupled to a network. The processor is adapted to obtain static context data associated with the network. The processor is further adapted to, for each network communication, obtain a certificate from a TLS handshake of the network communication, parse the certificate to obtain corresponding certificate field values, perform one or more analyses of the certificate field values against the static context data, and in response to the analyses resulting in detection of a threat, taking one or more actions based on the analyses.

In some embodiments, the network appliance intercepts the TLS handshake of network communication.

In some embodiments, the network appliance is adapted to passively intercept each network communication, wherein transmission of the network communication to a destination device is uninterrupted by interception of the network communication.

In some embodiments, the network appliance is adapted to obtain certificate field values including a common name of a certificate holder of the certificate and one or more subject alternative names of corresponding alternative domains that use the certificate.

In some embodiments, the network appliance is adapted to obtain certificate field values including an issuing organization and information corresponding to the issuing organization. In some embodiments, the network appliance is adapted to obtain certificate field values including a set of validity dates.

In some embodiments, the network appliance is adapted to obtain a last certificate of a certificate chain and wherein parsing the certificate comprises parsing the last certificate.

In some embodiments, the network appliance is adapted to, for each of the network communications, provide an alert corresponding to the threat in response to the one or more analyses resulting in detection of a threat.

Another alternative embodiment comprises a computer program product comprising a non-transitory computer-readable medium storing instructions executable by one or more processors to perform a method including obtaining a first network communication transmitted via a network, obtaining a certificate in a Transport Layer Security (TLS) handshake of the first network communication, parsing the certificate to obtain corresponding certificate field values, obtaining static context data associated with the network, performing one or more analyses of the certificate field values against the static context data and, in response to the one or more analyses resulting in detection of a threat, taking one or more actions based on the one or more analyses.

While embodiments described herein have been described with respect to a limited number of embodiments, those skilled in the art, having the benefit of this detailed description, will appreciate that other embodiments can be devised which do not depart from the scope of embodiments as disclosed herein. Accordingly, the scope of embodiments described herein should be limited only by the attached claims.

It will be understood that while specific embodiments have been presented herein, these embodiments are merely illustrative, and not restrictive. Rather, the description is intended to describe illustrative embodiments, features and functions in order to provide an understanding of the embodiments without limiting the disclosure to any particularly described embodiment, feature or function, including any such embodiment feature or function described. While specific embodiments of, and examples for, the embodiments are described herein for illustrative purposes only, various equivalent modifications are possible within the spirit and scope of the disclosure, as those skilled in the relevant art will recognize and appreciate.

As indicated, these modifications may be made in light of the foregoing description of illustrated embodiments and are to be included within the spirit and scope of the disclosure. Thus, while particular embodiments are described, a latitude of modification, various changes and substitutions are intended in the foregoing disclosures, and it will be appreciated that in some instances some features of embodiments disclosed herein will be employed without a corresponding use of other features, and features described with respect to one embodiment may be combined with features of other embodiments without departing from the scope and spirit of the disclosure as set forth herein.

The description also includes the following numbered clauses:
1. A network appliance adapted to be coupled to a network, the network appliance comprising:
   a processor and a memory;
   the processor adapted to obtain static context data associated with the network;
   the processor further adapted to, for each network communication:
      obtain a certificate in a Transport Layer Security (TLS) handshake of the network communication;
      parse the certificate to obtain corresponding certificate field values;
      perform one or more analyses of the certificate field values against the static context data; and
   in response to the one or more analyses resulting in detection of a threat, taking one or more actions based on the one or more analyses.
2. The network appliance of clause 1, wherein the processor is adapted to, for each of the network communications:
   decrypt the certificate of the network communication to obtain the corresponding certificate field values; and
   in response to determining that no threat is detected, re-encrypting the network communication and forwarding the network communication to a corresponding destination.
3. The network appliance of clause 1 or clause 2, wherein receiving the network communication comprises intercepting the TLS handshake of network communication.
4. The network appliance of clause 3, wherein the network appliance is adapted to passively intercept each network communication, wherein transmission of the network communication to a destination device is uninterrupted by interception of the network communication.
5. The network appliance of any of clauses 1 to 4, wherein the processor is adapted to obtain certificate field values including a common name (CN) of a certificate holder of the certificate and one or more subject alternative names (SANs) of corresponding alternative domains that use the certificate.
6. The network appliance of any of clauses 1 to 5, wherein the processor is adapted to obtain certificate field values including an issuing organization and information corresponding to the issuing organization.
7. The network appliance of any of clauses 1 to 6, wherein the processor is adapted to obtain certificate field values including a set of validity dates.
8. The network appliance of any of clauses 1 to 7, wherein obtaining the certificate comprises obtaining a last certificate of a certificate chain and wherein parsing the certificate comprises parsing the last certificate.
9. The network appliance of any of clauses 1 to 8, wherein the processor is adapted to, for each of the network communications:
   in response to the one or more analyses resulting in detection of a threat, providing an alert corresponding to the threat.
10. A computer program product comprising a non-transitory computer-readable medium storing instructions executable by one or more processors to perform:
   (a) obtaining a first network communication transmitted via a network;
   (b) obtaining a certificate in a Transport Layer Security (TLS) handshake of the first network communication;
   (c) parsing the certificate to obtain corresponding certificate field values;
   (d) obtaining static context data associated with the network;
   (e) performing one or more analyses of the certificate field values against the static context data; and
   (f) in response to the one or more analyses resulting in detection of a threat, taking one or more actions based on the one or more analyses.

## Claims

1. A method for detecting threats comprising:
(a) obtaining a first network communication transmitted via a network;
(b) obtaining a certificate in a Transport Layer Security (TLS) handshake of the first network communication;
(c) parsing the certificate to obtain corresponding certificate field values;
(d) obtaining static context data associated with the network;
(e) performing one or more analyses of the certificate field values against the static context data; and
(f) in response to the one or more analyses resulting in detection of a threat, taking one or more actions based on the one or more analyses.

2. The method of claim 1, further comprising:
monitoring all network communications in the network, including the first network communication; and
for each of the network communications, performing steps (b)-(f).

3. The method of claim 1 or claim 2, wherein receiving the first network communication comprises intercepting the TLS handshake of the first network communication.

4. The method of claim 3, wherein receiving the first network communication comprises receiving the intercepted TLS handshake of the first network communication at a network appliance other than a destination device associated with the first network communication.

5. The method of claim 4, wherein transmission of the first network communication to the destination device is uninterrupted by interception of the first network communication.

6. The method of any preceding claim, wherein the certificate field values comprise a common name (CN) of a certificate holder of the certificate and one or more subject alternative names (SANs) of corresponding alternative domains that use the certificate.

7. The method of any preceding claim, wherein the certificate field values comprise an issuing organization and information corresponding to the issuing organization.

8. The method of any preceding claim, wherein the certificate field values comprise a set of validity dates.

9. The method of any preceding claim, wherein obtaining the certificate comprises obtaining a last certificate of a certificate chain and wherein parsing the certificate comprises parsing the last certificate.

10. The method of any preceding claim, wherein taking the one or more actions comprises providing an alert in response to detecting that the certificate is invalid.

11. A network appliance adapted to be coupled to a network, the network appliance configured to perform a method as set out in at least one or claims to 1 to 10.

12. A computer program product comprising a computer-readable medium storing instructions which, wherein executed by one or more processors, cause the one or more processors to perform a method as set out in at least one of claims 1 to 10.
